# EUROPÄISCHE PATENTSCHRIFT

(11) **EP 0 931 448 B1**
(45) Veröffentlichungstag und Bekanntmachung des Hinweises auf die Patenterteilung: **04.10.2001**
(21) Anmeldenummer: 98123353.9
(22) Anmeldetag: 08.12.1998
(51) Int. Cl.: A01F 15/07, A01D 82/00

(54) **Rolle einer Runballenpresse**
Roll for rotobaler
Rouleau pour presse à balles rondes

(30) Priorität: 16.01.1998 DE 19801528
(43) Veröffentlichungstag der Anmeldung: 28.07.1999
(73) Patentinhaber: DEERE & COMPANY, Moline, Illinois 61265-8098 (US)
(72) Erfinder: Viaud, Jean, 70100 Gray (FR); Preece, David, Nottingham NG129QA (GB)
(74) Vertreter: Magin, Ludwig Bernhard

(56) Entgegenhaltungen:
- DE-U- 8 804 590
- US-A- 4 198 804
- US-A- 4 850 183

## Beschreibung

Die Erfindung betrifft eine Rolle einer Rundballenpresse, mit einem zylindrischen Rohr, einem Wellenstummel, einem Flansch und einer Hülse.

Herkömmliche Rollen von Rundballenpressen enthalten ein zylindrisches und normalerweise profiliertes Stahlrohr, das sich über eine Länge von 1,2 oder 1,5 Meter erstreckt. Zur drehbaren Lagerung wird das Rohr von einer durchgehenden Welle getragen, zwischen der und dem Rohr sich mehrere Stahlblechflansche erstrecken (GREENLAND, Presse a Balles Rondes, Druckvermerk F606 1-f; CLAAS Rollant 66, Rollant 46, Druckvermerk 8/89 (Gi) ft.450/190 469.1).

Aus der US-A-4,198,804 geht eine Rundballenpresse mit einer Vielzahl von Rollen hervor, die einen Ballenpreßraum umgeben und sich aus einem Rohr mit einer Vielzahl von inneren radial verlaufenden und damit verschweißten Stegen zusammensetzen. Auf jeder Seite erstreckt sich ein Wellenstummel durch die jeweiligen beiden äußeren Stege und stützt sich mittels angeschweißter Flanschbleche an dem äußeren Steg und mittels eines freien Endbereichs an dem zweiten Steg ab.

Dieser Aufbau ist nachteilig, weil jede Schweißverbindung zu Rissen bei den einer Dauerwechselbelastung unterworfenen Rohren führen kann und weil die erforderlichen Schweißverbindungen an den Flanschen und Rohren aufwendig sind.

Das der Erfindung zugrunde liegende Problem wird darin gesehen, daß der Fertigungsaufwand zum Erreichen einer ausreichenden Biegefestigkeit relativ hoch ist und durchgehende Wellen, die im Rolleninnern mit Flanschen verbunden sind, schwierig zu montieren und demontieren sind.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden die Biegekräfte von der Hülse aufgenommen und in den Flansch und in die Welle bzw. den Wellenstummel eingeleitet. Bisher übliche Flansche im Rohrinnern entfallen, wodurch sich die Wartung und Herstellung vereinfacht und die Gefahr von Rissen an den Verbindungsstellen zwischen den Flanschen und dem Rohr entfällt. Eine solche Hülse kann in einfacher Weise von außen in das Rohr eingeschoben werden und bedarf bei ausreichend geringen Passungen keine stofförmigen Verbindung zwischen der Hülse und dem Rohr. Es ist nicht erforderlich, daß die Hülse mit ihrer gesamten Mantelfläche in Berührung mit der Innenfläche des Rohrs gelangt. Vielmehr reicht es aus, wenn bei einem mehrkantigen Rohr nur die inneren Kanten oder Flächen, die den inneren Umfangskreis bilden, mit der Hülse in Berührung kommen. Wichtig ist lediglich, daß sich das Rohr ausreichend fest auf der Hülse abstützt und die Biegekräfte einleiten kann. In einfacher Weise kann also eine im Querschnitt runde Hülse in ein mehrkantiges Rohr eingefügt werden. Bei engen Toleranzen kann auch eine Preßpassung durch Aufschrumpfen gewählt werden. Die übrigen Torsions- und Biegekräfte werden von der drehfesten Verbindung zwischen dem Flansch und dem Rohr aufgenommen.

Eine leicht herstellbare Variante der Erfindung ist darin zu sehen, daß die Hülse und der Flansch in der Art eines Topfes ausgebildet sind, d. h. daß die Hülse einerseits - nicht notwendigerweise einenends - mit einer den Flansch bildenden Wandung geschlossen ist, an die/den drehfest die Welle oder der Wellenstummel angeschlossen werden kann. Die Verbindung mit der Welle oder dem Wellenstummel kann reib- oder formschlüssig erfolgen, z. B. mittels einer Verzahnung zwischen einer Nabe und der Welle oder dem Wellenstummel.

Eine hervorragende Wartungsmöglichkeit ergibt sich, wenn die Wellenstummel mittels eigener Flansche an den Flansch der Hülse angeschraubt werden können. Auf diese Weise braucht zum Demontieren der Rolle keine Welle entfernt zu werden, sondern es reicht aus, wenn die Wellenstummel mit ihren Flanschen demontiert werden und dann in ihren Lagern verharren können.

Eine hohe Torsions- und Biegesteifigkeit des Wellenstummels mit dem Flansch wird erreicht, wenn diese einstückig und insbesondere als Schmiedeteil ausgebildet sind. Andererseits kann dieser Teil auch aus einem hochfesten Guß gegossen werden.

Nach einer anderen Variante werden der Flansch und die Hülse zunächst einzeln hergestellt und dann zusammengefügt, z. B. zusammengeschweißt.

Zur Übertragung der Drehkräfte und zur Lagesicherung der Hülse in dem Rohr - wenn dies jeweils erforderlich ist - kann anstatt einer reibschlüssigen Schrumpfverbindung auch eine Schweißverbindung erzeugt werden, und zwar durch Punktschweißen oder durch das Anbringen von Löchern in dem Rohr, in deren Wandungsbereich das Rohr mit der Hülse verschweißt wird.

Um die erfindungsgemäßen Vorteile bei optimalem Materialeinsatz zu erreichen, sollte die Hülse so bemessen sein, daß sie sich bis zu einer Stelle in dem Rohr erstreckt, an der das Rohr die maximal zu erwartende Biegebelastung ohne die Hülse aufzunehmen vermag. Diese Stelle kann rechnerisch leicht ermittelt werden, indem der Biegemomentverlauf des Rohrs bei der zu erwartenden Last ermittelt wird.

In der Zeichnung sind zwei nachfolgend näher beschriebene Ausführungsbeispiele der Erfindung dargestellt. Es zeigt:
- Fig. 1: eine Rundballenpresse mit erfindungsgemäßen Rollen,
- Fig. 2: eine erfindungsgemäße Rolle mit einer Hülse und einem getrennt von dieser hergestellten Flansch in perspektivischer Darstellung,
- Fig. 3: die Rolle aus Figur 2 im vertikalen Längsmittenschnitt,
- Fig. 4: eine erfindungsgemäße Rolle mit einer Hülse und einem einstückig mit dieser hergestellten Flansch in perspektivischer Darstellung, und
- Fig. 5: die Rolle aus Figur 4 im vertikalen Längsmittenschnitt.

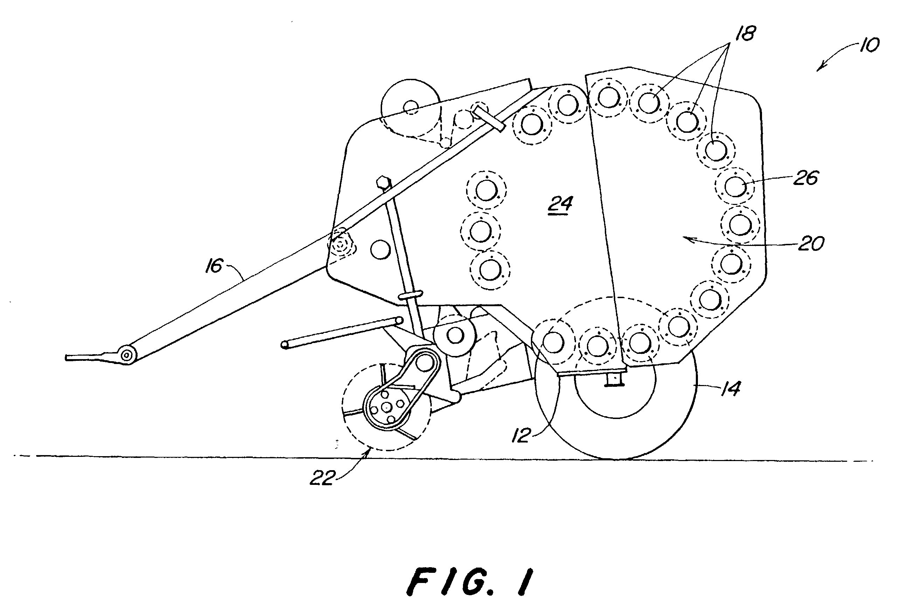

Eine in Figur 1 gezeigte Rundballenpresse 10 besitzt einen Rahmen 12, der sich über Räder 14 auf dem Boden abstützt, mittels einer Deichsel 16 an ein nicht gezeigtes Zugfahrzeug angehängt werden kann und Rollen 18, die einen Ballenpreßraum 20 umgeben.

Bei der dargestellten Rundballenpresse 10 handelt es sich um eine Rundballenpresse mit einem Ballenpreßraum 20 unveränderlicher Größe, dem über eine Aufnahmevorrichtung 22 auf dem Boden liegendes Erntegut für einen Preßvorgang zugeführt wird.

Allerdings kann es sich bei der Rundballenpresse 10 auch um eine anderer Bauart handeln, z. B. um eine Rundballenpresse mit größenveränderlichem Preßraum.

Der Rahmen 12 enthält zwei Seitenwände 24, in denen sich eine Vielzahl nahezu auf einem Kreis gelegener Öffnungen 26 befindet. Die Seitenwände 24 bilden die seitliche Begrenzung des Ballenpreßraums 20.

Die Rollen 18 sind in diesem Ausführungsbeispiel als kantige Rotationszylinder ausgebildet und mittels nicht näher gezeigter Lager in den Seitenwänden 24 drehbar gelagert. Je nach der gewählten Bauart sind die Rollen 18 frei drehbar oder angetrieben. Die Rollen 18 umgeben den Ballenpreßraum 20 umfangsseitig und werden somit ständig von dem zu pressenden Gut beaufschlagt. Für andere Einsatzzwecke können die Rollen 18 auch im Querschnitt rund sein.

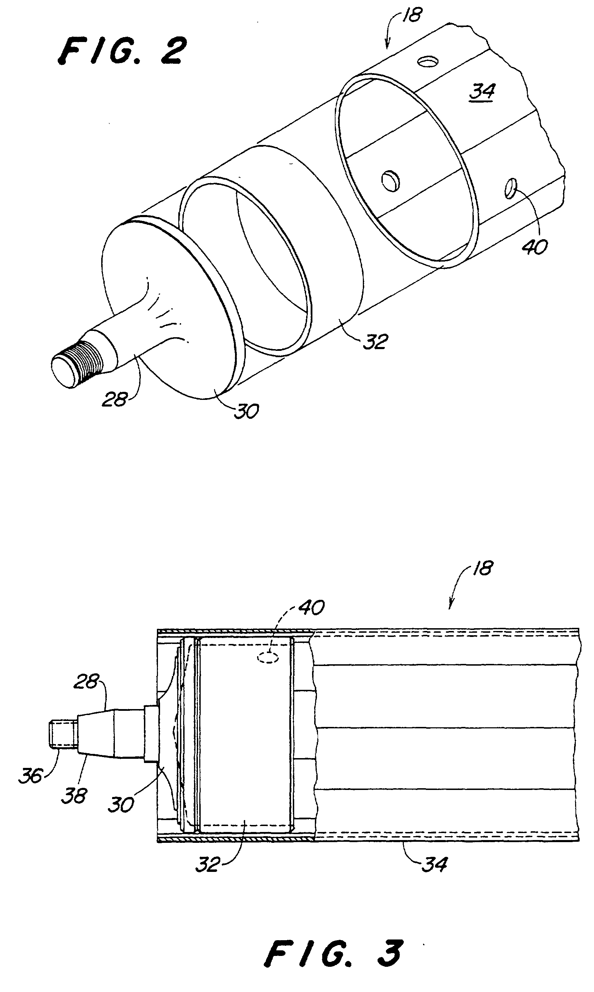

Gemäß Figur 2 setzt sich eine Rolle 18 aus einer Welle 28 oder Wellenstummel, einem Flansch 30, einer Hülse 32 und einem Rohr 34 zusammen.

Die Welle 28 ist mit einem Gewindeende 36 und einem daran anschließenden Konus 38 versehen, die gemeinsam dazu dienen, ein nicht gezeigtes Antriebsrad drehfest zu halten. Die Welle 28 verläuft konzentrisch zu der Rolle 18 und außerhalb des Rohrs 34.

Der Flansch 30 stellt sich im wesentlichen als eine radial verlaufende Scheibe dar, deren Außendurchmesser abgesehen von Toleranzen dem Innendurchmesser des Rohrs 34 entspricht.

Die Welle 28 geht mit sich stets vergrößerndem Durchmesser in den Flansch 30 über und bildet mit diesem eine stoffliche Einheit, die aus schweißbarem Metall besteht.

Es wäre allerdings auch möglich, die Welle 28 lösbar mit dem Flansch 30 zu verbinden, z. B. sie in den Flansch 30 einzuschrauben oder sonstwie darin zu befestigen.

Die Hülse 32 ist von einfacher Form mit einem Außendurchmesser, der dem Innenkreis des Rohrs 34 entspricht. Die Stärke und Länge der Hülse 32 sind so bemessen, daß sie geeignet ist, die auf das Rohr 34 einwirkenden Lastspitzen aufzufangen, so daß diese die einwirkenden Biege- und gegebenenfalls Torsionsmomente ohne Beschädigung aufnehmen kann. In einem tatsächlichen Fall ist die Hülse 32 110 mm lang, 10 mm stark und hat einen Außendurchmesser von 200 mm. Die Hülse 32 besteht aus einem Metall, das mit dem des Flansches 30 verschweißt werden kann. Der Außendurchmesser der Hülse 32 ist so zu bemessen, daß die Hülse 32 ohne Spiel in dem Rohr 34 gehalten wird. Gegebenenfalls kann die Hülse 32 in das Rohr 34 eingeschrumpft werden. Die Hülse 32 ist mit rundem Querschnitt dargestellt, kann aber auch jedem Innenprofil des Rohrs 34 folgen.

Das Rohr 34 ist als Zylinder ausgebildet, der sieben gleichmäßig verteilte Kanten aufweist. Die Innenform des Rohrs 34 kann der Außenform der Hülse 32 entsprechen oder auch nur stellenweise auf der Hülse 32 aufsitzen. Z. B. kann ein Rohr 34 mit mehreren Kanten und dazwischenliegenden geraden Flächen nur im Mittenbereich der geraden Flächen auf der Hülse 32 aufsitzen und dort mit ihr verbunden werden. Die Länge des Rohrs 34 entspricht ca. dem elf- bis fünfzehnfachen der Länge der Hülse 32. Das Rohr 34 ist vorzugsweise aus Stahl hergestellt und kann bei Bedarf mit der Hülse 32 und/oder dem Flansch 30 verschweißt werden. Für eine Schweißverbindung sind in die Mantelfläche in dem Deckungsbereich mit der Hülse 32 mehrere gleichmäßig auf dem Umfang verteilte Löcher 40 vorgesehen, deren Umfangswand mit der Hülse 32 verschweißt werden kann.

Der Zusammenbau der Rolle 18 wird im folgenden anhand von Figur 3 beschrieben.

Der Flansch 30 und die Hülse 32 werden miteinander verschweißt und bilden eine topfartige Einheit mit einem gleichmäßigen Außendurchmesser. Da auch die Welle 28 bzw. der Wellenstummel drehfest mit dem Flansch 30 verbunden ist ergibt sich eine Rotationseinheit, die in das Innere des Rohrs 34 eingeschoben und mit diesem drehfest verbunden, z. B. verschweißt werden kann. Wie es sich aus Figur 3 ergibt, wahrt der Flansch 30 zu der Stirnseite des Rohrs 34 einen geringen Abstand von ca. 30 - 40 Millimeter, was jedoch keinesfalls zwingend ist.

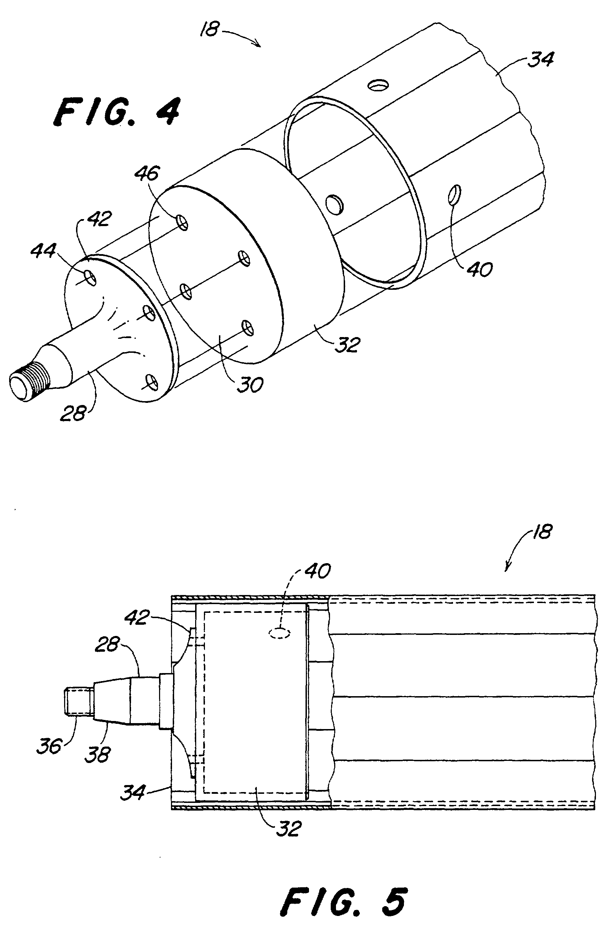

Im weiteren wird auf die Variante der Rolle 18 gemäß den Figuren 4 und 5 Bezug genommen.

Die Welle 28 ist auch in diesem Ausführungsbeispiel als ein Wellenstummel ausgebildet und weist das Gewindeende 36 und den Konus 38 auf. Allerdings läuft die Welle 28 in einem zweiten Flansch 42 aus, der der Anschaulichkeit wegen von geringerem Durchmesser gezeigt ist, aber auch den gleichen Durchmesser wie der Flansch 30 haben kann. Dieser zweite Flansch 42 ist als Schraubflansch ausgebildet und enthält mehrere Bohrungen 44, die zur Aufnahme von nicht gezeigten Schrauben geeignet sind.

Der Flansch 30 in der Art einer einfachen und ebenen radialen Scheibe ist einstückig mit der Hülse 32 ausgebildet und z. B. in einem Guß hergestellt. Die Hülse 32 entspricht in ihren Abmessungen der Hülse 32 aus den Figuren 2 und 3 und kann in gleicher Weise im Bereich der Löcher 40 mit dem Rohr 34 verschweißt werden, wenn dies angebracht ist. Der Flansch 30 weist Gewindebohrungen 46 auf, deren Anordnung sich mit der der Bohrungen 44 deckt und die geeignet sind, die durch die Bohrungen 44 gesteckten Schrauben zu halten. Die Welle 28 mit ihrem zweiten Flansch 42 bildet im Zusammenbau mit dem Flansch 30 und der Hülse 32 einen rotationssymmetrischen Teil, der konzentrisch in das Rohr 34 eingeschoben und in diesem festgelegt werden kann.

Abweichend von der vorherigen Beschreibung kann der Flansch 30 auch mit der Hülse 32 verschweißt und abschließend mit dem zweiten Flansch 42 verschraubt werden.

## Patentansprüche

1. Rolle (18) einer Rundballenpresse (10), mit einem zylindrischen Rohr (34), einem Wellenstummel (28), einem Flansch (30) und einer Hülse (32), wobei:
a) die Hülse (32)
aa) drehfest mit dem Flansch (30) zu einer glockenförmigen Einheit verbunden oder verbindbar ist,
ab) mit ihrer Mantelfläche an dem Innenumfang des Rohrs (34) auf einem Teil dessen Länge und wenigstens teilweise anliegt,
ac) mit dem Rohr (34) kraft- oder stoffschlüssig verbindbar ist,
ad) in ihrer Länge entsprechend der Größe der auf das Rohr (34) einwirkenden Biege- und Torsionsmomente bemessen ist, und
b) der Wellenstummel (28)
ba) in eine drehfeste Verbindung mit der Hülse (32) bringbar ist und
bb) freitragend an den Flansch (30) angeschlossen oder anschließbar ist.

2. Rolle nach Anspruch 1, **dadurch gekennzeichnet, daß** der Flansch (30) und die Hülse (32) einstückig, insbesondere als Gußteil, ausgebildet sind und drehfest mit dem Wellenstummel (28) verbindbar sind.

3. Rolle nach Anspruch 2, **dadurch gekennzeichnet, daß** der Wellenstummel (28) mit einem zweiten Flansch (42) versehen ist, der an den Flansch (30) der Hülse (32) anschraubbar ist.

4. Rolle nach Anspruch 1, **dadurch gekennzeichnet, daß** der Flansch (30) einstückig mit dem Wellenstummel (28), insbesondere als Schmiedeteil, ausgebildet und mit der Hülse (32) drehfest verbindbär ist.

5. Rolle nach Anspruch 4, **dadurch gekennzeichnet, daß** der Flansch (30) und die Hülse (32) einstückig als Schweißzusammenbau ausgebildet sind.

6. Rolle nach einem oder mehreren der vorherigen Ansprüche, **dadurch gekennzeichnet, daß** der Flansch (30) mit dem Rohr (34) verschweißt ist.

7. Rolle nach einem oder mehreren der vorherigen Ansprüche, **dadurch gekennzeichnet, daß** die Hülse (32) mit dem Rohr verschweißt, ist.

8. Rolle nach einem oder mehreren der vorherigen Ansprüche, **dadurch gekennzeichnet, daß** sich die Hülse (32) bis zu einer Stelle in dem Rohr (34) erstreckt, an der das Rohr (34) die maximal zu erwartende Biegebelastung ohne die Hülse (32) aufzunehmen vermag.

## Claims

1. Roller (18) of a round baler (10), with a cylindrical tube (34), a stub shaft (28), a flange (30) and a sleeve (32), wherein:
a) the sleeve (32)
aa) is connected to or can be connected to the flange (30), rotationally fast therewith, into a bell-shaped unit
ab) has its peripheral surface lying at least partially against the inner circumference of the tube (34) over a part of the length thereof,
ac) can be connected frictionally or integrally to the tube (34)
ad) is dimensioned in its length in accordance with the size of the bending and torsion moments acting on the tube (34), and
b) the stub shaft (28)
ba) can be brought into a rotationally fast connection with the sleeve (32) and
bb) is or can be attached cantilevered from the flange (30).

2. A roller according to claim 1, **characterized in that** flange (30) and the sleeve (32) are formed in one piece, especially as a cast part, and can be connected to the stub shaft (28), rotationally fast therewith.

3. A roller according to claim 2, **characterized in that** the stub shaft (28) is provided with a second flange (42), which can be screwed to the flange (30) of the sleeve (32).

4. A roller according to claim 1, **characterized in that** the flange (30) is formed in one piece with the stub shaft (28), especially as a forged part, and can be connected to the sleeve (32), rotationally fast therewith.

5. A roller according to claim 4, **characterized in that** the flange (30) and the sleeve (32) are formed in one piece as a welded assembly.

6. A roller according to one or more of the preceding claims, **characterized in that** the flange (30) is welded to the tube (34),

7. A roller according to one or more of the preceding claims, **characterized in that** the sleeve (32) is welded to the tube.

8. A roller according to one or more of the preceding claims, **characterized in that** the sleeve (32) extends up to a point in the tube (34) at which the tube (34) is liable to receive the maximum anticipated bending stress without the sleeve (32).

## Revendications

1. Rouleau (18) d'une pressé à balles rondes (10), comportant un tube cylindrique (34), un bout d'arbre (28), une bride (30) et une douille (32), dans lequel
a) la douille (32)
aa) est reliée ou peut être reliée solidairement en rotation à la bride (30) pour former une unité en forme de cloche,
ab) s'applique par sa surface enveloppe, sur une partie de sa longueur et au moins partiellement, sur la périphérie intérieure du tube (34),
ac) peut être reliée au tube (34) selon une liaison de force ou selon une liaison par matériaux compatibles,
ad) a une longueur dimensionnée de manière à correspondre à la valeur du moment fléchissant et du moment de torsion, qui agissent sur le tube (34), et
b) le bout d'arbre (28)
ba) peut être placé dans une liaison solidaire en rotation avec la douille (32), et
bb) est raccordé ou peut être raccordé en porte-à-faux à la bride (30).

2. Rouleau selon la revendication 1, **caractérisé en ce que** la bride (30) et la douille (32) sont réalisées d'un seul tenant, notamment sous la forme d'une pièce moulée, et peuvent être reliées solidairement en rotation au bout d'arbre (28).

3. Rouleau selon la revendication 2, **caractérisé en ce que** le bout d'arbre (28) comporte une seconde bride (42), qui peut être fixée par vissage à la bride (30) de la douille (32).

4. Rouleau selon la revendication 1, **caractérisé en ce que** la bride (30) est agencée d'un seul tenant avec le bout d'arbre (28), notamment sous la forme d'une pièce forgée, et peut être reliée solidairement en rotation à la douille (32).

5. Rouleau selon la revendication 4, **caractérisé en ce que** la bride (30) et la douille (32) sont réalisées d'un seul tenant sous la forme d'un assemblage soudé.

6. Rouleau selon une ou plusieurs des revendications précédentes, **caractérisé en ce que** la bride (30) est soudée au tube (34).

7. Rouleau selon une ou plusieurs des revendications précédentes, **caractérisé en ce que** la douille (32) est soudée au tube.

8. Rouleau selon une ou plusieurs des revendications précédentes, **caractérisé en ce que** la douille (32) s'étend jusqu'à un emplacement dans le tube (34, au niveau duquel le tube (34) peut recevoir la contrainte maximale de flexion, à laquelle on peut s'attendre, sans la douille (32).
